# EUROPÄISCHE PATENTSCHRIFT

(11) **EP 3 114 337 B1**
(45) Veröffentlichungstag und Bekanntmachung des Hinweises auf die Patenterteilung: **07.10.2020**
(21) Anmeldenummer: 15707039.2
(22) Anmeldetag: 04.02.2015
(51) Int. Cl.: F02B 67/06

(54) **RIEMENSPANNER**
BELT TENSIONER
TENDEUR DE COURROIE

(30) Priorität: 05.03.2014 DE 102014203952
(43) Veröffentlichungstag der Anmeldung: 11.01.2017
(73) Patentinhaber: Schaeffler Technologies AG & Co. KG, 91074 Herzogenaurach (DE)
(72) Erfinder: HARTMANN, Bernd, 91085 Weisendorf (DE); MARICIC, Zoran, 90768 Fürth (DE); WEIDNER, Alexander, 90766 Fürth (DE)
(86) Internationale Anmeldenummer: PCT/DE2015/200062
(87) Internationale Veröffentlichungsnummer: WO 2015/131888

(56) Entgegenhaltungen:
- EP-A1- 2 573 423
- WO-A1-2013/087467
- WO-A2-2007/025374
- DE-A1-102011 082 764
- DE-A1-102011 089 394
- DE-A1-102012 209 028

## Beschreibung

Die Erfindung betrifft einen Riemenspanner für einen Generator-Riementrieb einer Brennkraftmaschine. Der Riemenspanner umfasst:
- ein ringförmiges Gehäuseteil, das die Generatorwelle umschließend auf dem Generatorgehäuse befestigt ist,
- ein ringförmiges Spannteil, das am Gehäuseteil um die Generatorwelle schwenkbar gelagert ist,
- eine einzige Spannrolle, die auf dem Spannteil gelagert ist und den Riemen vorspannt und deren Schwenkbereich durch mechanisches Anschlagen des Spannteils am Gehäuseteil zwei Endlagen aufweist,
- und eine Feder, die zwischen dem Gehäuseteil und dem Spannteil eingespannt ist und das Spannteil zur Erzeugung der Riemenvorspannung mit Drehmoment beaufschlagt.

### Hintergrund der Erfindung

Ein derartiger Riemenspanner ist aus der EP 2 573 423 A1 bekannt. Die Feder ist dort als die Generatorwelle umschließende Schraubenfeder ausgebildet.

Die DE 10 2012 209 028 A1 offenbart einen Riemenspanner, der mit zwei Spannrollen den Riemen eines Startergenerator-Riementriebs vorspannt.

Weitere Riemenspanner sind aus der DE 10 2011 089 394 A1, der WO 2013/087467 A1, der DE 10 2011 082 764 A1 und der WO 2007/025374 A2 bekannt.

### Aufgabe der Erfindung

Der vorliegenden Erfindung liegt die Aufgabe zugrunde, einen Riemenspanner der eingangs genannten Art im Hinblick auf dessen möglichst kompakte Bauweise konstruktiv zu verbessern.

### Zusammenfassung der Erfindung

Die Lösung dieser Aufgabe ergibt sich dadurch, dass die Feder eine Bogenfeder ist, die sich parallel zur Riemenebene und umfänglich vollständig außerhalb des Schwenkbereichs der Spannrolle erstreckt, wobei das Gehäuseteil einen durch zwei umfängliche Stirnwände begrenzten, bogenförmigen Raum zur Aufnahme der Bogenfeder aufweist, die zwischen einer der Stirnwände am gehäuseteilseitigen Federende und einem in den Federaufnahmeraum hinein ragenden Mitnehmer des Spannteils am spannteilseitigen Federende eingespannt ist und wobei der Mitnehmer als sich axial seitens der Spannrolle erhebender Vorsprung ausgebildet ist.

Die konstruktive Ausgestaltung der Spannerbefederung - eine Bogenfeder ist bekanntlich stets eine Schraubendruckfeder, deren Längserstreckung nicht gerade, sondern kreisbogenförmig ist - ermöglicht es, den Federbauraum auf einen Kreisbogen zu beschränken, der von der betrieblich verschwenkenden Spannrolle nicht überstrichen wird. Da sich gegenüber dem bekannten Riemenspanner im Schwenkbereich der Spannrolle kein Federbauraum erstreckt, können das Spannteil und die Spannrolle mit vergleichsweise kleinem Axialabstand zum Generatorgehäuse angeordnet werden. Dies gilt dann auch für die Riemenscheibe, die in derselben Riemenebene wie die Spannrolle verläuft, so dass im Ergebnis eine axial besonders kompakte Baugruppe aus Generator und Riemenspanner vorliegt. Da zudem die Riemenebene mit vergleichsweise geringem Abstand zum Generatorgehäuse verläuft, ist auch die freie Länge der Generatorwelle zwischen der Riemenscheibe und der ersten Lagerstelle im Generatorgehäuse zugunsten einer vergleichsweise geringen Wellenbiegung entsprechend kurz.

### Kurze Beschreibung der Zeichnungen

Weitere Merkmale der Erfindung ergeben sich aus der nachfolgenden Beschreibung und aus den Zeichnungen, in denen ein Ausführungsbeispiel eines erfindungsgemäßen Riemenspanners dargestellt ist. Es zeigen:
- Figur 1: den Generator eines Generator-Riementriebs mit dem darauf montierten Riemenspanner in perspektivischer Darstellung;
- Figur 2: den Riemenspanner in Rückansicht;
- Figur 3: den Riemenspanner im Längsschnitt;
- Figur 4: den Riemenspanner ohne Gehäusedeckel in Rückansicht;
- Figur 5: das Detail X aus Figur 4;
- Figur 6: das Gehäuseteil des Riemenspanners als Einzelteil in perspektivischer Vorderansicht;
- Figur 7: das Spannteil des Riemenspanners als Einzelteil mit Kunststoffbelag in perspektivischer Rückansicht;
- Figur 8: das Spannteil des Riemenspanners als Einzelteil ohne Kunststoffbelag in perspektivischer Vorderansicht;
- Figur 9: die Federschale des Riemenspanners in perspektivischer Einzelteildarstellung;
- Figur 10: die Bogenfeder des Riemenspanners in perspektivischer Einzelteildarstellung.

### Ausführliche Beschreibung der Zeichnungen

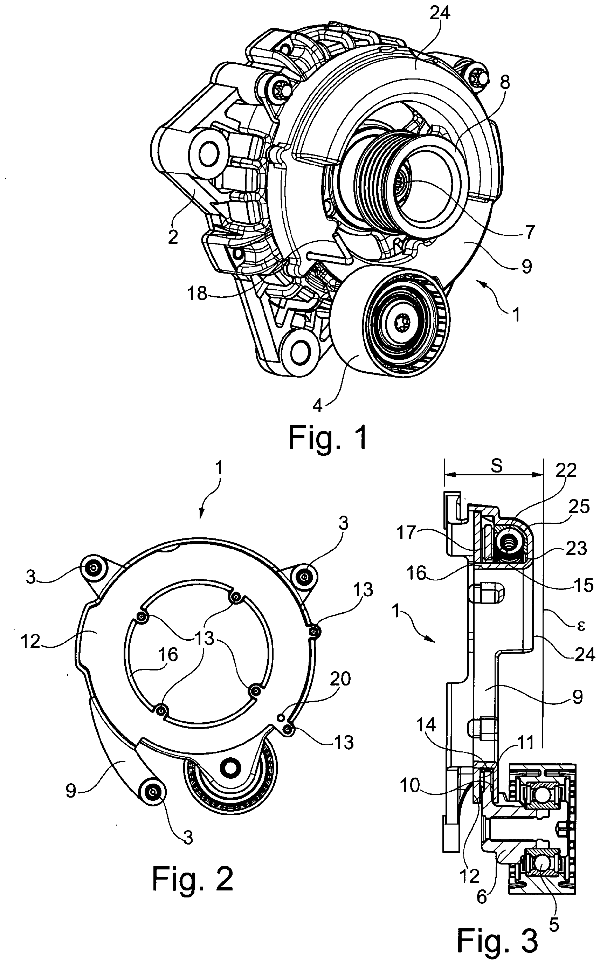

Die Figuren 1 bis 3 zeigen einen erfindungsgemäßen Riemenspanner 1 im Zusammenbau mit einem Generator eines Generator-Riementriebs einer Brennkraftmaschine bzw. als fertig montiertes Einzelteil. Der Riemenspanner ist auf der riemenseitigen Stirnseite des Generatorgehäuses 2 befestigt und hier an drei Befestigungspunkten 3 mit dem Generatorgehäuse verschraubt. Da es sich um einen gewöhnlichen Generator ohne Motorbetrieb, d.h. ohne Startfunktion der Brennkraftmaschine handelt, hat der Riemenspanner nur eine einzige Spannrolle 4 zum Vorspannen des Riemens in dessen Leertrum. Das Kugellager 5 der Spannrolle ist mit einem ringförmigen Spannteil 6 verschraubt, das die Welle 7 mit Riemenscheibe 8 des Generators umschließt und das um die Generatorwelle schwenkbar an und - genauer gesagt - in einem ringförmigen Gehäuseteil 9 gelagert ist. Die Schwenklagerung des Spannteils erfolgt vorliegend konzentrisch zur Generatorwelle, kann in einer erfindungsgemäßen Alternative aber auch um die Generatorwelle mit Achsversatz dazu angeordnet sein (solange die Riemenscheibe radial freigängig ist). Der Innendurchmesser des die Generatorwelle ebenfalls umschließenden Gehäuseteils ist wesentlich größer als der Durchmesser der Riemenscheibe, so dass die erforderliche Kühlluftzufuhr in den Generator nicht beeinträchtigt wird.

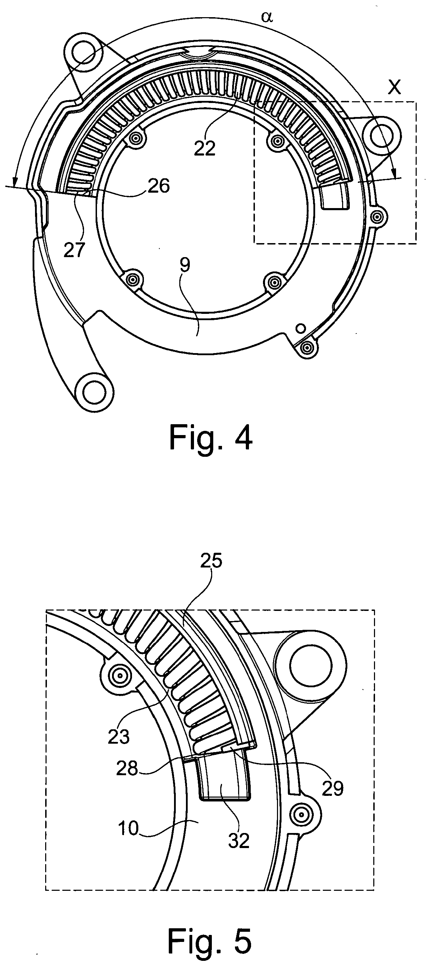

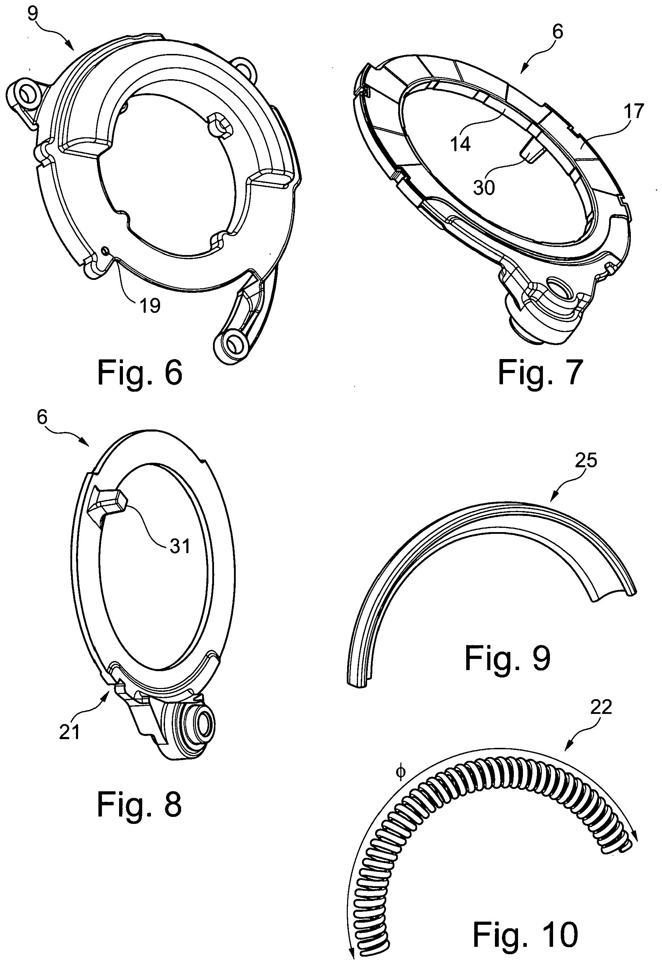

Das axiale Schwenklager des Spannteils 6 im Gehäuseteil 9 ist einerseits durch eine dem Generator zugewandte Stirnfläche 10 des Gehäuseteils selbst und andererseits durch eine dem Generator abgewandte Stirnfläche 11 eines Gehäusedeckels 12 gebildet, der auf der Rückseite des Riemenspanners 1 an sechs Befestigungspunkten 13 mit dem Gehäuseteil verschraubt ist. Selbstverständlich sind andere bekannte und/oder unlösbare Befestigungsarten wie Verstemmen, Vernieten möglich. Das radiale Schwenklager des Spannteils im Gehäuseteil ist durch den inneren Ringumfang 14 des Spannteils und durch den Außenumfang 15 eines gehäusefesten Ringkragens 16 gebildet, der sich zwischen der Lagerstirnfläche 10 des Gehäuseteils und dem Gehäusedeckel erstreckt (siehe auch Figur 4). Im Hinblick auf die erforderlichen Lagerungseigenschaften und die Dämpfung der betrieblichen Spannteilbewegungen besteht die Werkstoffpaarung des Gleitlagers aus den metallischen Gehäuseflächen 10, 11 und einem Kunststoffbelag 17 des Spannteils aus Polyamid mit darin eingelagertem PTFE, der die beiden Stirnseiten und den inneren Ringumfang des Spannteils bedeckt (siehe auch Figur 7). Der auf dem Spannteil aufgeclipste Kunststoffbelag ist zweiteilig ausgeführt, wobei das erste Belagteil die in Figur 7 untere Stirnseite des Spannteils und mit einem Ringbund dessen inneren Ringumfang bedeckt und wobei das zweite Belagteil die in Figur 7 obere Stirnseite des Spannteils bedeckt.

Die Fixierung des Riemenspanners 1 in der umfänglich vorgespannten Montagestellung der Spannrolle 4 erfolgt mittels eines entfernbaren Sicherungsstifts 18, der das Spannteil 6 und das Gehäuseteil 9 in dieser Stellung gegeneinander blockiert. Hierzu durchsetzt der Sicherungsstift zwei miteinander fluchtende Bohrungen 19 und 20 im Gehäuseteil (siehe Figur 6) beziehungsweise im Gehäusedeckel 12 (siehe Figur 2) sowie eine umfängliche Ausnehmung 21 im Spannteil (siehe Figur 8).

Falls erforderlich, kann das Eindringen von Schmutz und Spritzwasser in das Gehäuseinnere durch eine (nicht dargestellte) separate Dichtung zwischen dem Gehäuseteil 9, dem Spannteil 6 und dem Gehäusedeckel 12 erschwert werden.

Die über die Spannrolle 4 in den Riemen eingeleitete Vorspannung wird mittels einer Bogenfeder 22 erzeugt, die parallel zur Riemenebene ε (Epsilon) in einem entsprechend bogenförmigen Raum 23 des Gehäuseteils 9 seitlich des Spannteils 6 aufgenommen ist und die Spannrolle über das Spannteil drehmomentbeaufschlagt - in Figur 1 gegen den Uhrzeigersinn. Eine dazu umgekehrte Spannrichtung ist mit entsprechend angepassten Spannerkomponenten selbstverständlich möglich. Der Federaufnahmeraum 23 ist durch eine sich axial (d.h. in Wellen- und Rollenachsrichtung) zur Spannrolle hin erstreckende Auswölbung 24 des Gehäuseteils gebildet. Die Axialerstreckung der Auswölbung ist so groß, dass sie mit der Spannrolle axial überlappt. Dies geht deutlich aus Figur 3 hervor: Die axiale Stirnfläche der Auswölbung liegt dort rechts von der linken Stirnfläche der Spannrolle. Der Umfangswinkel der Auswölbung beträgt ca. 180° und hat eine Mitte, die in der nominalen Betriebsposition des Riemenspanners 1 im wesentlichen diametral gegenüberliegend zur Spannrolle verläuft. Deren Schwenkbereich ist durch mechanisches Anschlagen des Spannteils am Gehäuseteil auf einen Winkel von ca. 40° beschränkt, so dass die Auswölbung - trotz deren mit der Spannrolle überlappender Axialerstreckung - auch in beiden Endlagen des Schwenkbereichs einen deutlichen Abstand zum Umfang der Spannrolle aufweist. Da sich also der Federaufnahmeraum und die diesen begrenzende Auswölbung umfänglich nicht in den Schwenkbereich der Spannrolle hinein erstrecken, sondern mit umfänglichem Abstand vollständig außerhalb davon verlaufen, kann die Spannrolle und folglich die gesamte Riemenebene mit vergleichsweise geringem Axialabstand zum Generatorgehäuse 2 angeordnet werden. Dies ist in Figur 3 anhand des Abstandsmaßes s zwischen der Anschraubebene des Gehäuseteils und der Riemenebene verdeutlicht.

Die Figuren 4 und 5 zeigen den Montagezustand des Riemenspanners 1, bei dem die Bogenfeder 22 und eine den Federaufnahmeraum 23 auskleidende Federschale 25, nicht aber das Spannteil 6 und der Gehäusedeckel 12 im Gehäuseteil 9 montiert sind. Der zur Schwenklagerung des Spannteils konzentrische Federaufnahmeraum ist gegenüber der Lagerstirnfläche 10 des Gehäuseteils axial zurückversetzt und durch zwei umfängliche Stirnwände begrenzt, wobei die eine Stirnwand 26 als Federauflage für das gehäuseteilseitige Ende 27 der Bogenfeder dient und wobei die andere Stirnwand 28 vor der Montage des Spannteils als umfänglicher Anschlag für das spannteilseitige Federende 29 dient. Im Ausführungsbeispiel ist die Bogenfeder vor der Montage des Spannteils unter leichter Vorspannung zwischen den Stirnwänden in den Federaufnahmeraum eingelegt. Diese Montagevorspannung ergibt sich dadurch, dass der von den Stirnwänden begrenzte Bogenwinkel α (alpha) des Federaufnahmeraums kleiner als der Bogenwinkel φ (phi) der ungespannten Bogenfeder ist (siehe Figur 10), und bewirkt, dass vor der Montage des Spannteils ein Herausfallen der Bogenfeder und der Federschale aus dem Federaufnahmeraum erschwert sind.

Der Bogenwinkel φ der ungespannten Bogenfeder 22 beträgt vorliegend etwa 180°. Insbesondere, aber dennoch nicht nur für den Fall, dass ein größerer Bogenwinkel erwünscht, für das Wickeln der Bogenfeder aber ungünstig ist, können auch zwei oder mehr Bogenfedern in Reihenschaltung und ein Federaufnahmeraum 23 mit entsprechend daran angepasstem Bogenwinkel α vorgesehen sein. Unabhängig davon sind auch parallel geschaltete Bogenfedern in Form eines Federpakets mit einer äußeren und einer inneren Bogenfeder möglich. Mit Hilfe dieser Parameter lässt sich die Gesamtcharakteristik der Spannerbefederung an den gewünschten Drehmomentverlauf der Spannrolle 4 in weiten Grenzen variieren.

Das in Figur 6 dargestellte Gehäuseteil 9 und das in den Figuren 7 und 8 mit beziehungsweise ohne den Gleitlagerbelag 17 dargestellte Spannteil 6 sind jeweils als Aluminiumdruckgussteil hergestellt. Alternativ sind ein- oder mehrteilige Umformteile aus Blechwerkstoff möglich. Das Spannteil ist mit einem Mitnehmer 30 versehen, der in den Federaufnahmeraum 23 hinein ragt und als seitlich zum Spannteil verlaufende Federauflage 31 für das spannteilseitige Federende 28 dient. Der Mitnehmer ist als Vorsprung ausgebildet, der sich von dem Ringkörper des Spannteils axial seitens der Spannrolle 4 erhebt, so dass die Federauflage für das spannteilseitige Federende vollständig neben dem Ringkörper und auf derselben Seite wie die Spannrolle verläuft. Ein Vorteil dieser Anordnung besteht darin, dass das von der Bogenfeder und der Spannrolle in die Schwenklagerung des Spannteils eingebrachte Kräftepaar ein vergleichsweise kleines Kippmoment erzeugt.

Die andere Stirnwand 28 ist mit einer Vertiefung 32 versehen, die bei der Montage des Spannteils 6 in das Gehäuseteil 9 den Mitnehmer 30 aufnimmt. Die Spannteilmontage wird hierdurch erheblich vereinfacht, da beim Einführen des Mitnehmers in die Vertiefung ein Platz schaffendes Verdrängen der an der anderen Stirnwand anschlagenden Bogenfeder 22 nicht erforderlich ist. In der fixierten Montagestellung gemäß Figur 1 und in den nominalen Betriebsstellungen der Spannrolle 4 ist die Bogenfeder zwischen der einen Stirnwand 26 am gehäuseteilseitigen Federende 27 und dem Mitnehmer am spannteilseitigen Federende 29 eingespannt.

Die Bogenfeder 22 stützt sich in radial auswärtiger Richtung an der Federschale 25 ab, die Federschwingungen entgegen wirkt. Die in den Figuren 3 und 9 dargestellte Federschale hat einen im wesentlichen L-förmigen Querschnitt, der sich etwa an den halben Federumfang anschmiegt. Die Federschale besteht aus Kunststoff, insbesondere mit Glasfaserverstärkung, als PTFE-Compound, und/oder aus jeweils kohlefaserverstärktem PA46 (Polyamid), PPS (Polyphenylensulfid) oder PEEK (Polyetheretherketon). Je nach tribologischer Belastung der Federschale durch die betrieblich darin oszillierende Bogenfeder können alternativ andere verschleißfeste Werkstoffe, Beschichtungen oder Befettungen im Feder-Schale-Kontakt vorgesehen werden.

### Liste der Bezugszahlen

- 1: Riemenspanner
- 2: Generatorgehäuse
- 3: Befestigungspunkt
- 4: Spannrolle
- 5: Kugellager
- 6: Spannteil
- 7: Welle des Generators
- 8: Riemenscheibe
- 9: Gehäuseteil
- 10: Stirnfläche des Gehäuseteils
- 11: Stirnfläche des Gehäusedeckels
- 12: Gehäusedeckel
- 13: Befestigungspunkt
- 14: innerer Ringumfang des Spannteils
- 15: Außenumfang des Ringkragens
- 16: Ringkragen
- 17: Kunststoffbelag
- 18: Sicherungsstift
- 19: Bohrung für Sicherungsstift
- 20: Bohrung für Sicherungsstift
- 21: Ausnehmung für Sicherungsstift
- 22: Bogenfeder
- 23: Federaufnahmeraum
- 24: Auswölbung des Federaufnahmeraums
- 25: Federschale
- 26: eine Stirnwand
- 27: gehäuseteilseitiges Federende
- 28: andere Stirnwand
- 29: spannteilseitiges Federende
- 30: Mitnehmer
- 31: Federauflage für das spannteilseitige Federende
- 32: Vertiefung für Mitnehmer

## Patentansprüche

1. Riemenspanner (1) für einen Generator-Riementrieb einer Brennkraftmaschine, umfassend:
- ein ringförmiges Gehäuseteil (9), das die Generatorwelle (7) umschließend auf dem Generatorgehäuse (2) befestigt ist,
- ein ringförmiges Spannteil (6), das am Gehäuseteil (9) um die Generatorwelle (7) schwenkbar gelagert ist,
- eine einzige Spannrolle (4), die auf dem Spannteil (6) gelagert ist und den Riemen vorspannt und deren Schwenkbereich durch mechanisches Anschlagen des Spannteils (6) am Gehäuseteil (9) zwei Endlagen aufweist,
- und eine Feder, die zwischen dem Gehäuseteil (9) und dem Spannteil (6) eingespannt ist und das Spannteil (6) zur Erzeugung der Riemenvorspannung mit Drehmoment beaufschlagt,
**dadurch gekennzeichnet, dass** die Feder eine Bogenfeder (22) ist, die sich parallel zur Riemenebene (ε) und umfänglich vollständig außerhalb des Schwenkbereichs der Spannrolle (4) erstreckt, wobei das Gehäuseteil (9) einen durch zwei umfängliche Stirnwände (26, 28) begrenzten, bogenförmigen Raum (23) zur Aufnahme der Bogenfeder (22) aufweist, die zwischen einer der Stirnwände (26) am gehäuseteilseitigen Federende (27) und einem in den Federaufnahmeraum (23) hinein ragenden Mitnehmer (30) des Spannteils (6) am spannteilseitigen Federende (29) eingespannt ist und wobei der Mitnehmer (30) als sich axial seitens der Spannrolle (4) erhebender Vorsprung ausgebildet ist.

2. Riemenspanner (1) nach Anspruch 1, **dadurch gekennzeichnet, dass** der Federaufnahmeraum (23) durch eine sich mit der Spannrolle (4) axial überlappende Auswölbung (24) des Gehäuseteils (9) gebildet ist, wobei die Auswölbung (24) in beiden Endlagen des Schwenkbereichs der Spannrolle (4) umfänglich von dieser beabstandet ist.

3. Riemenspanner (1) nach Anspruch 1 oder 2, **dadurch gekennzeichnet, dass** die andere Stirnwand (28) vor der Montage des Spannteils (6) an das Gehäuseteil (9) als umfänglicher Anschlag für das spannteilseitige Federende (29) dient und mit einer den Mitnehmer (30) bei der Montage des Spannteils (6) an das Gehäuseteil (9) aufnehmenden Vertiefung (32) versehen ist.

4. Riemenspanner (1) nach einem der vorhergehenden Ansprüche, **dadurch gekennzeichnet, dass** der von den Stirnwänden (26, 28) begrenzte Bogenwinkel (α) des Federaufnahmeraums (23) kleiner als der Bogenwinkel (φ) der ungespannten Bogenfeder (22) ist.

5. Riemenspanner (1) nach einem der vorhergehenden Ansprüche, **dadurch gekennzeichnet, dass** der Federaufnahmeraum (23) mit einer Federschale (25) ausgekleidet ist, gegen die sich die Bogenfeder (22) in radial auswärtiger Richtung abstützt.

6. Riemenspanner (1) nach Anspruch 5, **dadurch gekennzeichnet, dass** die Federschale (25) aus Kunststoff besteht.

7. Riemenspanner (1) nach einem der vorhergehenden Ansprüche, **dadurch gekennzeichnet, dass** das axiale Schwenklager des Spannteils (6) am Gehäuseteil (9) durch das Gehäuseteil (9) einerseits und durch einen am Gehäuseteil (9) befestigten Gehäusedeckel (12) andererseits gebildet ist.

8. Riemenspanner (1) nach Anspruch 7, **dadurch gekennzeichnet, dass** das axiale und radiale Schwenklager des Spannteils (6) am Gehäuseteil (9) durch einen Kunststoffbelag (17) des Spannteils (6) gebildet ist.

## Claims

1. A belt tensioner (1) for a generator belt drive of an internal combustion engine, comprising:
- an annular housing part (9) which surrounds the generator shaft (7) and is fastened to the generator housing (2),
- an annular tensioning part (6) which is pivotally mounted on the housing part (9) about the generator shaft (7),
- a single tensioning roller (4) which is mounted on the tensioning part (6) and pretensions the belt and the swivel range of which has two end positions due to the mechanical stopping of the tensioning part (6) on the housing part (9),
- and a spring which is clamped between the housing part (9) and the tensioning part (6) and applies torque to the tensioning part (6) to generate the belt pretension,
**characterised in that** the spring is a bow spring (22) which extends parallel to the belt plane (ε) and circumferentially completely outside the swivel range of the tensioning roller (4), wherein the housing part (9) has a bow-shaped chamber (23) limited by two circumferential end walls (26, 28) for receiving the bow spring (22), which is clamped between one of the end walls (26) on the housing part-side spring end (27) and a driver (30) of the tensioning part (6) protruding into the spring receiving space (23) is clamped on the tensioning part-side spring end (29), and wherein the driver (30) is designed as a projection which rises axially on the side of the tensioning roller (4).

2. The belt tensioner (1) according to claim 1, **characterised in that** the spring receiving chamber (23) is formed by a bulge (24) of the housing part (9) axially overlapping with the tensioning roller (4), wherein the bulge (24) is circumferentially spaced from the tensioning roller (4) in both end positions of the same.

3. The belt tensioner (1) according to claim 1 or 2, **characterised in that** the other end wall (28) before mounting the tensioning part (6) on the housing part (9) serves as a circumferential stop for the tensioning part-side spring end (29) and is provided with a recess (32) receiving the driver (30) when mounting the tensioning part (6) on the housing part (9).

4. The belt tensioner (1) according to any one of the preceding claims, **characterised in that** the bow angle (α) of the spring receiving chamber (23) delimited by the end walls (26, 28) is smaller than the bow angle (φ) of the untensioned bow spring (22).

5. The belt tensioner (1) according to any one of the preceding claims, **characterised in that** the spring receiving space (23) is lined with a spring shell (25), against which the bow spring (22) is supported in the radially outward direction.

6. The belt tensioner (1) according to claim 5, **characterised in that** the spring shell (25) consists of plastic.

7. The belt tensioner (1) according to any one of the preceding claims, **characterised in that** the axial pivot bearing of the tensioning part (6) on the housing part (9) is formed by the housing part (9) on the one hand and by a housing cover (12) attached to the housing part (9) on the other hand.

8. The belt tensioner (1) according to claim 7, **characterised in that** the axial and radial pivot bearing of the tensioning part (6) on the housing part (9) is formed by a plastic covering (17) of the tensioning part (6).

## Revendications

1. Tendeur de courroie (1) pour une transmission par courroie de générateur d'un moteur à combustion interne, comprenant :
- une partie de boîtier annulaire (9) qui est fixée sur le boîtier de générateur (2) de manière à entourer l'arbre de générateur (7),
- une partie de tension annulaire (6) qui est montée pivotante sur la partie de boîtier (9) autour de l'arbre de générateur (7),
- un seul galet tendeur (4) qui est monté sur la partie de tension (6) et précontraint la courroie et dont la plage de pivotement présente deux positions extrêmes du fait de la butée mécanique de la partie de tension (6) sur la partie de boîtier (9),
- et un ressort qui est enserré entre la partie de boîtier (9) et la partie de tension (6) et applique un couple à la partie de tension (6) afin de générer la précontrainte de la courroie,
**caractérisé en ce que** le ressort est un ressort en arc (22) qui s'étend parallèlement au plan de la courroie (ε) et de manière périphérique en totalité en dehors de la plage de pivotement du galet tendeur (4), la partie de boîtier (9) présentant un espace (23) en forme d'arc délimité par deux parois frontales périphériques (26, 28) destiné à recevoir le ressort en arc (22), qui est précontraint entre l'une des parois frontales (26) sur l'extrémité de ressort côté boîtier (27) et un entraîneur (30) de la partie de tension (6) faisant saillie dans l'espace de réception de ressort (23) sur l'extrémité du ressort côté partie de tension (29) et l'entraîneur (30) étant conçu comme une saillie qui s'élève axialement du côté du galet tendeur (4).

2. Tendeur de courroie (1) selon la revendication 1, **caractérisé en ce que** l'espace de réception de ressort (23) est formé par un renflement (24) chevauchant axialement le galet tendeur (4) de la partie de boîtier (9), le renflement (24), dans les deux positions extrêmes de la plage de pivotement du galet tendeur (4), étant espacé de celui-ci de manière périphérique.

3. Tendeur de courroie (1) selon la revendication 1 ou 2, **caractérisé en ce que** l'autre paroi frontale (28) avant le montage de la partie de tension (6) sur la partie de boîtier (9) sert de butée périphérique à l'extrémité du ressort côté partie de ressort (29) et est dotée d'un évidement (32) recevant l'entraîneur (30) lors du montage de la partie de tension (6) sur la partie de boîtier (9).

4. Tendeur de courroie (1) selon l'une quelconque des revendications précédentes, **caractérisé en ce que** l'angle d'arc (α) de l'espace de réception de ressort (23) délimité par les parois frontales (26, 28) est inférieur à l'angle d'arc (φ) du ressort en arc non contraint (22).

5. Tendeur de courroie (1) selon l'une quelconque des revendications précédentes, **caractérisé en ce que** l'espace de réception de ressort (23) est garni d'une gaine de ressort (25) contre laquelle le ressort en arc (22) est supporté dans le sens radial vers l'extérieur.

6. Tendeur de courroie (1) selon la revendication 5, **caractérisé en ce que** la gaine de ressort (25) est en matière plastique.

7. Tendeur de courroie (1) selon l'une quelconque des revendications précédentes, **caractérisé en ce que** le palier de pivotement axial de la partie de tension (6) sur la partie de boîtier (9) est formé par la partie de boîtier (9) d'une part et par un couvercle de boîtier (12) fixé sur la partie de boîtier (9) d'autre part.

8. Tendeur de courroie (1) selon la revendication 7, **caractérisé en ce que** le palier de pivotement axial et radial de la partie de tension (6) sur la partie de boîtier (9) est formé par un revêtement plastique (17) de la partie de tension (6).
